Europäisches Patentamt

European Patent Office

Office européen des brevets

(19)

(11) Veröffentlichungsnummer: **0 111 838**
**A2**

(12) # EUROPÄISCHE PATENTANMELDUNG

(21) Anmeldenummer: **83112344.3**

(51) Int. Cl.³: **F 24 D 19/10**

(22) Anmeldetag: **08.12.83**

(30) Priorität: **18.12.82 DE 3246995**

(43) Veröffentlichungstag der Anmeldung:
**27.06.84  Patentblatt  84/26**

(84) Benannte Vertragsstaaten:
**FR GB SE**

(71) Anmelder: **Laing, Oliver**
**Hofener Weg 35-37**
**D-7148 Remseck 2 - Aldingen(DE)**

(72) Erfinder: **Laing, Oliver**
**Hofener Weg 35-37**
**D-7148 Remseck 2 - Aldingen(DE)**

(54) Raumheizanlage mit mehreren Zonen.

(57) In einer Raumheizanlage mit Zonen mit unterschiedlichem Heizbedarf ist eine Vorlaufleitung (2) und eine Rücklaufleitung (6) zwischen Kessel und Verbraucher angeordnet. Jede Zone besitzt eine eigene Pumpe (7), die entweder aus dem Vorlauf oder aus dem Rücklauf Warmwasser ansaugt, welches nach Abgabe der Nutzwärme über den Rücklauf (6) wieder zum Kessel (1) strömt. Zur Vermeidung gegenseitiger Beeinflussung ist jede Pumpe mit einem selbstschliessenden Rückschlagventil in Reihe geschaltet.

EP 0 111 838 A2

Croydon Printing Company Ltd.

## Raumheizanlage mit mehreren Zonen

Die Erfindung betrifft eine Raumheizungsanlage mit Zonen von unterschiedlichem Heizbedarf, bei denen Umwälzpumpen einen flüssigen
Wärmeträger zwischen der Wärmequelle, einem Heizkessel, einem Wärmespeicher, oder einer Wärmepumpe und der Wärmesenke, den wärmeabgebenden Heizkörpern, umwälzen.

Durch erhöhte Energiepreise sind die Anforderungen an Zentralheizanlagen gestiegen. Wirkungsvolle Maßnahmen zur Energieeinsparung bestehen darin, daß Zonen eines Hauses oder einer Wohnung, die unterschiedlichen Wärmebedarf, gegebenenfalls auch zu unterschiedlichen Zeiten, aufweisen, unabhängig voneinander und entsprechend dem jeweiligen Wärmebedarf, geregelt werden. Dies erfolgt bisher durch Umwälzung mittels
zentraler Umwälzpumpe und anschließender Verzweigung der Vorlaufleistungen, wobei die den einzelnen Zonen zugeordneten Stränge durch
Magnetventile oder Motorventile bis zur völligen Abschaltung geregelt
werden.

Der Nachteil dieser Anlagen besteht darin, daß die zentrale Umwälzpumpe
auch dann noch voll in Betrieb sein muß, wenn auch nur noch ein einziger
Raum der Heizungswärme bedarf. Dies führt zu einem Stromverbrauch,
der innerhalb eines Jahres Werte annimmt, die bis zu 10% der gesamten
Heizkosten betragen. Darüberhinaus führen Magnetventile, die gegen Wasser
mit ferromagnetischen Beimischungen extrem schmutzempfindlich sind,
häufig zu Störungen, außerdem erlauben sie nur eine auf/zu-Regelung und
erzeugen Schließgeräusche, sodaß sie nicht in Wohn- oder Schlafräumen angeordnet werden können. Motorventile haben die letztgenannten Nachteile
zwar nicht, sind dafür aber kompliziert und kostspielig und folgen nur sehr
langsam sich ändernden Wärmebedarfssignalen.

Ein weiterer Weg, Energie zu sparen, besteht darin, über Schaltuhren eine Absenkung der Kesseltemperatur oder bei Heizungsanlagen mit Beimischventil eine Erhöhung der Beimischrate von kaltem Rücklaufwasser zu erwirken. Eine solche Absenkung aber betrifft alle Zonen der Anlage gleichzeitig, sodaß wiederum so lange noch eine einzige Zone der vollen Heizung bedarf, die energieeinsparende Temperaturabsenkung nicht möglich ist.

Die Erfindung beseitigt die Nachteile bekannter Systeme. Gemäß der Erfindung wird auf die Installation einer zentralen Umwälzpumpe verzichtet. An ihre Stelle treten Zonenpumpen, die aus der Vorlaufleitung erwärmtes Wasser absaugen und dieses durch die wärmeabgebenden Konvektoren, Radiatoren oder Großflächenheizungen fördern. Jeder dieser Zonenpumpen ist ein Temperaturschalter zugeordnet, der bei Überschreitung einer eingestellten Soll-Temperatur des Raumes die entsprechende Zonenpumpe abschaltet. Da im Vorlauf des Kessels ein Unterdruck und im Rücklauf ein Überdruck erzeugt wird, solange auch nur noch eine Zonenpumpe in Betrieb ist, würde der Strang einer Zone, deren Pumpe abgeschaltet ist, dennoch - entgegen der betriebsmäßigen Durchströmung - durchströmt werden, wodurch eine völlige Abschaltung einer Zone unmöglich würde. Die Erfindung sieht deshalb vor, daß in Reihe mit den Zonenpumpen und Heizkörpern ein Rückschlagventil geschaltet wird, welches eine ungewollte gegensinnige Durchströmung eines Stranges verhindert.

Die erfindungsgemäße Vorrichtung führt zu einer außerordentlich einfachen Installation und zu einer übersichtlichen Regelung, bei der sich keine Rückkoppelungen zwischen benachbarten Zonen ergeben. Die vergleichsweise sehr kleinen Pumpen werden nur dann betrieben, wenn innerhalb der ihnen zugeordneten Zonen Wärme benötigt wird. Liegt der Wärmebedarf unter der Nennleistung des Kessels - und dies gilt für ca. 95% der Heizperiode - so erfolgt die Heißwasserzufuhr in Impulsen, wobei das Impuls - Pausenverhältnis proportional mit abnehmendem Wärmebedarf auch abnimmt. Die Laufzeit der Zonenpumpe beträgt deshalb nur einen Bruchteil der Laufzeit der Umwälzpumpen in konventionellen Anlagen. Die kleine Aufnahmeleistung der Zonenpumpen in Verbindung mit niedriger relativer Einschaltdauer führt zu einer erheblichen Stromersparnis.

Die erfindungsgemäße Anlage wird jedoch nicht nur von der zur Erhaltung der Raum-Solltemperatur erforderlichen Wärme geregelt, sondern in einer weiter verbesserten Ausführungsform auch von der zeitlichen Zonennutzung. Die Erfindung sieht deshalb in einer besonderen Ausführungsform vor, daß unabhängig von einer Schaltuhr zur Nachtabsenkung für die einzelnen Zonen Schaltuhren eingesetzt werden, die es dem Benutzer ermöglichen, die täglichen Heizperioden selbst zu bestimmen. Für diesen Fall sieht die Erfindung Zonenpumpen vor, die mit Schaltuhren in Reihe geschaltet sind. Da Ventilgeräusche entfallen, wird die Zonenpumpe erfindungsgemäß vorteilhaft im jeweils zu beheizenden Raum anstelle eines Heizkörperventils eingebaut. Da sich die zugehörige Schaltuhr im gleichen Raum befinden soll, sieht die Erfindung als bevorzugte Lösung eine Pumpe vor, bei welcher die Schaltuhr mit der Pumpe oder dem Raumthermostaten zu einer Einheit zusammengefaßt ist. Als besonders vorteilhaft hat sich erwiesen, daß jeder Zonenpumpe zwei Temperaturschalter zugeordnet sind, von denen einer mit der Schaltuhr in Reihe geschaltet ist und auf die gewünschte Solltemperatur eingestellt wird, während der zweite Temperaturschalter auf eine abgesenkte Temperatur eingestellt wird und während des Ausschaltintervalles der Schaltuhr die Pumpe nur dann einschaltet, wenn die Raumtemperatur unter der vorgewählten Absenktemperatur oder auch bis in die Nähe der Frostgrenze abgefallen ist. Um ein Überschwingen der Raumtemperatur zu vermeiden, sieht die Erfindung vor, daß ein in der Nähe des Temperaturfühlers angeordneter Heizwiderstand während der Einschaltung der Pumpe in Abhängigkeit von der Außentemperatur umsomehr beheizt wird, je höher die Außentemperatur ist.

Die Erfindung erfordert für Anlagen im Wohnhaus Pumpen von so geringer Leistung, wie sie in konventioneller Ausführung nicht herstellbar sind, die außerdem gegen ein häufiges Ein- und Ausschalten unempfindlich sind. Pumpen mit magnetisch in ihrer Lage gehaltenen Läufern eignen sich jedoch für erfindungsgemäße Heizanlagen.

Die Erfindung soll an nachstehender Figur beschrieben werden:

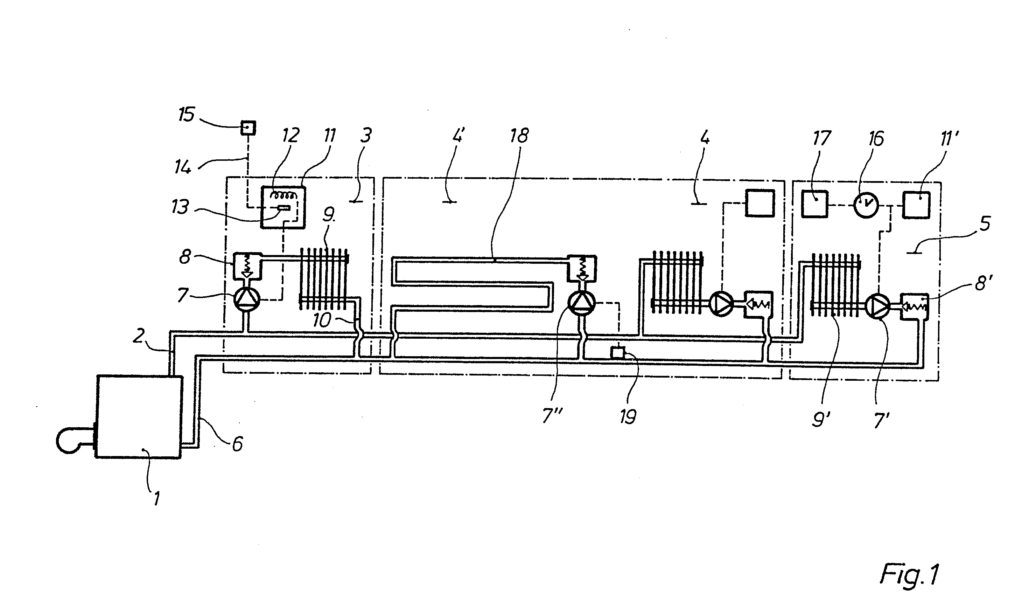

Die Figur 1 zeigt das Schaltbild der erfindungsgemäßen Raumheizanlage. Vom Heizkessel (1) führt eine Vorlaufleitung (2) durch die den einzelnen Zonen zugeordneten Räume (3,4,5). Parallel dazu verläuft die Rücklaufleitung (6). In der Zone (3) kommuniziert die Umwälzpumpe (7) saugseitig mit der Vorlaufleitung (2). Druckseitig ist ein Rückschlagventil (8) angeordnet, dessen Schließkraft unter dem dynamischen Druck der Pumpe liegt, jedoch größer ist als die betriebsmäßig höchste Druckdifferenz zwischen dem Rücklauf (6) und dem Vorlauf (2). Danach folgen die Heizkörper (9), die ausgangsseitig über die Leitung (10) mit dem Rücklauf verbunden sind. Das Regelgerät (11) enthält einen Thermoschalter (12) und einen Heizwiderstand (13), der dem Motor der Pumpe (7) parallelgeschaltet ist. Der Heizwiderstand ist über die Leitung (14) mit einem Widerstand (15) in Reihe geschaltet, der einen negativen Temperaturkoeffizient aufweis. Dieser Widerstand (15) ist entweder außerhalb des Hauses oder an der nach außen weisenden Fensterscheibe angeordnet und bewirkt, daß der Heizwiderstand (13) umso mehr Wärme abgibt, je höher die Außentemperatur ist. Dadurch wird ein Überschwingen der Raumtemperatur verhindert.

Im Raum 5 ist ein Strang dargestellt, bei dem die Pumpe (7') hinter den Heizkörpern (9) angeordnet ist, sodaß das Rückschlagventil mit der Rücklaufleitung (6) kommuniziert. Ein erstes Regelgerät (11') ist als Raumthermostat ausgebildet, an dem die Temperatur für die Tagesstunden, an denen geheizt werden soll, vorgewählt werden kann. Unter Zwischenschaltung einer Schaltuhr (16) ist ein zweiter Raumthermostat (17) vorgesehen, der die Temperatur während der Nicht-Heizstunden nach oben begrenzt. Hierdurch wird erreicht, daß während der Nachtstunden und auch während derjenigen Tagesstunden, an denen der Raum (5) nicht bewoht wird, nur ein sehr geringer Wärmeverbrauch stattfindet.

Im Raum 4 sind zwei Systeme nebeneinander dargestellt. Der im Bereich 4 gezeigte Strang entspricht dem Strang 9', 8', 7'. Der Strang im Bereich 4' dagegen versorgt eine Fußbodengroßflächenheizung (18). Die Pumpe 7" ist dabei an der Rücklaufleitung (6), die Heizwasser von geringerer Temperatur führt als die Vorlaufleitung, angebunden. Anstelle eines Raumthermostaten ist ein Thermostat (19) vorgesehen, der die Pumpe 7" nur dann einschaltet, wenn ein hinreichender Wärmebedarf vorhanden ist. Dies ist gemäß der Erfindung immer dann gegeben, wenn der Strang im Raumbereich 4 eingeschaltet ist. Sobald die vom Kessel aus gesehen hinter dem Thermostaten (19) liegenden Stränge inaktiv sind, kühlt die Rücklaufleitung (6) soweit ab, daß der Thermostat (19) die Pumpe 7" stillegt.

Patentansprüche

Anspruch 1

Raumheizanlage für Zonen mit unterschiedlichem Heizbedarf, mit einer Wärmequelle, mehreren wärmeabgebenden Heizkörpern, wärmeträgerführenden
Rohrleitungen und Pumpen zur Umwälzung des flüssigen Wärmeträgers, bestehend aus einer Kesselvorlaufleitung, einer Kesselrücklaufleitung und
parallel zueinander geschalteten Strängen zur Wärmeversorgung der Zonen und
mit Einrichtungen zur Wärmemengenregelung der Stränge durch temperaturabhängige Regelgeräte, dadurch gekennzeichnet, dass mit jedem Strang
eine saugseitig mit der Kesselvorlaufleitung verbundene Umwälzpumpe und
ein Rückschlagventil in Reihe geschaltet ist, wobei das Rückschlagventil
selbstschliessend ausgebildet ist und eine Schliesskraft aufweist, die zur
Öffnung einen erheblich niedrigeren Druck erfordert, als der Druck der
Pumpe bei maximaler Fördermenge, jedoch grösser ist, als die betriebsmässig höchste Druckdifferenz zwischen der Kesselrücklaufleitung und der
Kesselvorlaufleitung und dass die Regelgeräte als Raumthermostat-Schalter
ausgebildet sind, die eine Pumpenmotor-Abschaltung bei Erreichung einer
vorgegebenen Raumtemperatur bewirken.

Anspruch 2

Raumheizanlage nach Anspruch 1, dadurch gekennzeichnet, dass die Pumpenmotore mit von Hand einstellbaren Schaltuhren in Reihe geschaltet sind.

Anspruch 3

Raumheizgeräte nach Anspruch 2, dadurch gekennzeichnet, dass die Schaltuhren mit der Umwälzpumpe eine Einheit bilden.

Anspruch 4

Raumheizgeräte nach Anspruch 2, dadurch gekennzeichnet, dass die Schaltuhren mit den Raumthermostaten eine Einheit bilden.

Anspruch 5

Raumheizanlage nach Anspruch 2, dadurch gekennzeichnet, dass der Pumpenmotor einerseits mit einer Schaltuhr und einem ersten Temperaturschalter für die Tages-Raumtemperaturen und andererseits mit einem Temperaturschalter für niedrige Nacht-Temperaturen in Reihe geschaltet ist.

Anspruch 6

Raumheizanlage nach Anspruch 1, dadurch gekennzeichnet, dass die Umwälzpumpe mit einem Läufer ausgerüstet ist, der magnetisch in seiner Lage gehalten wird.

Fig.1